# FASCICULE DE BREVET EUROPEEN

(11) **EP 2 208 636 B1**
(45) Date de publication et mention de la délivrance du brevet: **28.09.2011**
(21) Numéro de dépôt: 09180450.0
(22) Date de dépôt: 22.12.2009
(51) Int. Cl.: B60N 2/28

(54) **Siège de véhicule à élément de maintien pour empêcher une sangle de ceinture de sécurité de masquer un élément d'ancrage**
Fahrzeugsitz mit einem Halteelement zum Verhindern, dass der Sicherheitsgurt ein Verankerungselement verdeckt
Vehicle seat with holding element to prevent the strap of a seatbelt from concealing an anchoring element

(30) Priorité: 16.01.2009 FR 0950262
(43) Date de publication de la demande: 21.07.2010
(73) Titulaire: Peugeot Citroën Automobiles SA, 78140 Vélizy-Villacoublay (FR)
(72) Inventeur: Oudart, Fabrice, 25700, VALENTIGNEY (FR)
(74) Mandataire: Vigand, Régis Louis Michel

(56) Documents cités:
- EP-A- 1 918 163
- WO-A-2008/025902
- US-A- 4 289 352
- US-A1- 2004 061 323

## Description

L'invention concerne les sièges (adultes) de véhicule, éventuellement automobile, et plus précisément ceux qui sont équipés d'au moins un élément d'ancrage pour la fixation d'un dispositif amovible, comme par exemple (et non limitativement) un siège enfant.

Un siège de véhicule avec un système de ceinture est montrée dans le document US 2004/0061323A1.

Comme le sait l'homme de l'art, certains sièges (adultes) de véhicule, éventuellement automobile, comprennent un (ou deux) élément(s) d'ancrage, intégré(s) à la jonction (ou interface) entre la partie inférieure de leur dossier et la partie arrière de leur assise et destiné(s) à permettre l'ancrage (de façon amovible) d'élément(s) de fixation implanté(s) dans la partie inférieure d'un dispositif amovible, comme par exemple un siège enfant (également appelé dispositif de retenue enfant (ou DRE)).

Ce type de siège (ou banquette) est généralement équipé d'une sangle de ceinture de sécurité dont une partie inférieure passe par un passage qui est situé au niveau de la jonction précitée afin d'être solidarisée fixement à sa structure ou à celle du véhicule. Lorsque la sangle n'est pas utilisée (et donc qu'elle est dans une position de repos), elle se retrouve sensiblement plaquée contre le dossier et sa partie inférieure à tendance à masquer l'un des éléments d'ancrage. Une personne qui souhaite solidariser un dispositif amovible aux éléments d'ancrage du siège, doit donc simultanément écarter la partie inférieure de la sangle afin de libérer l'accès à l'élément d'ancrage qui est masqué, tenir le dispositif amovible et translater ce dernier vers l'arrière afin de venir ancrer ses éléments de fixation inférieurs sur les éléments d'ancrage, ce qui s'avère peu commode, voire même difficile à réaliser.

L'invention a donc pour but de remédier à l'inconvénient précité.

Elle propose à cet effet un siège (ou banquette) de véhicule (éventuellement automobile) comprenant un dossier, une assise et au moins un élément d'ancrage, d'une part, défini au niveau d'un passage situé à la jonction (ou l'interface) entre une partie inférieure du dossier et une partie arrière de l'assise, et d'autre part, sur lequel peut être ancré un dispositif amovible (comme par exemple (et non limitativement) un siège enfant).

Ce siège (ou banquette) se caractérise par le fait qu'il comprend au voisinage de son passage un élément de maintien qui est destiné à maintenir dans une position écartée latéralement de son élément d'ancrage une portion d'une partie inférieure d'une sangle de ceinture de sécurité destinée à passer par ce passage.

Le siège (ou banquette) selon l'invention peut comporter d'autres caractéristiques qui peuvent être prises séparément ou en combinaison, et notamment :
- son élément de maintien peut être de type élastique ;
- son élément de maintien peut être solidarisé à la partie arrière de l'assise ou bien à la partie inférieure du dossier au voisinage du passage ;
- son élément de maintien peut entourer au moins partiellement la portion de la partie inférieure de la sangle ;
   ➢ son élément de maintien peut être agencé sous la forme d'une bande qui est destinée à entourer l'une des deux faces opposées de la portion de la partie inférieure de la sangle ou bien sous la forme d'une boucle qui est destinée à entourer complètement la portion de la partie inférieure de la sangle ;
- il peut être pré-équipé avec la sangle.

D'autres caractéristiques et avantages de l'invention apparaîtront à l'examen de la description détaillée ci-après, et des dessins annexés, sur lesquels :
- la figure 1 illustre schématiquement, dans une vue en coupe dans un plan XZ, un exemple de réalisation de siège de véhicule automobile selon l'invention, avant installation d'un dispositif amovible, et
- la figure 2 illustre schématiquement, dans une vue en perspective du côté avant, le siège de la figure 1.

Les dessins annexés pourront non seulement servir à compléter l'invention, mais aussi contribuer à sa définition, le cas échéant.

L'invention a pour but de proposer un siège (SI) de véhicule, éventuellement automobile, comprenant au moins un élément d'ancrage (EA1), à accès non entravé, pour un élément de fixation inférieur d'un dispositif amovible.

Dans ce qui suit, on considère, à titre d'exemple non limitatif, que le véhicule est de type automobile, comme par exemple une voiture. Mais, l'invention n'est pas limitée à ce type de véhicule. Elle concerne en effet tout type de véhicule comprenant au moins un siège ou une banquette sur laquelle peut être installé au moins un dispositif amovible comportant au moins un élément de fixation inférieur.

Par ailleurs, on considère dans ce qui suit, à titre d'exemple non limitatif, que le dispositif amovible est un siège enfant (ou DRE) répondant à des normes internationales et comportant deux éléments de fixation inférieurs, par exemple de type Isofix, fixés respectivement sur deux parties inférieures, de préférence symétriquement par rapport à un plan vertical médian (XZ). Mais, l'invention n'est pas limitée à ce type de dispositif amovible. Elle concerne d'autres types de dispositif amovible, comme par exemple des caisses ou colis devant être étroitement fixés sur un siège afin de ne pas être « ballottés » et/ou pour répondre à des normes ou réglementations (inter)nationales.

En outre, on considère dans ce qui suit, à titre d'exemple non limitatif, que le siège (SI), qui est propre à recevoir un dispositif amovible (ici un siège enfant), est un siège installé en position 1/3 ou 2/3 ou encore 3/3 du rang deux d'une voiture à deux rangs (de type break), et dont le rang un est situé à l'avant de l'habitacle. Mais, l'invention n'est pas limitée à ce type de siège. Ainsi, il pourrait notamment s'agir d'une banquette à deux ou trois places, voire même plus.

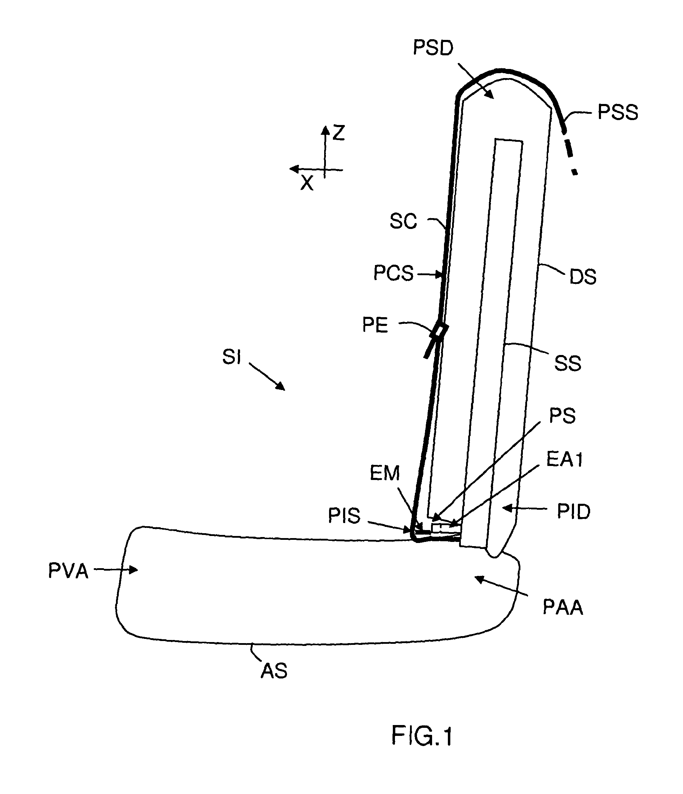

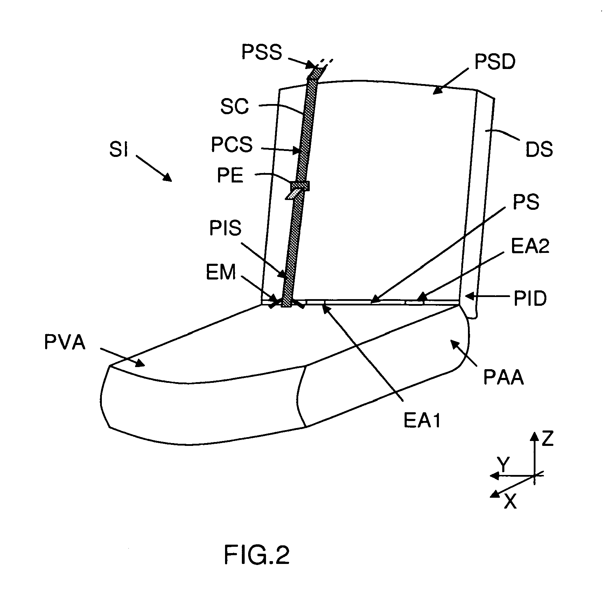

On a schématiquement représenté sur les figures 1 et 2 un exemple de siège (pour adulte) SI destiné à être installé sur la structure (plancher) d'une voiture. Ce siège SI comprend une assise AS et un dossier DS destinés à être solidarisés à la structure de la voiture.

Le dossier DS comprend ici une partie structurelle rigide SS sur laquelle sont montés une garniture et, dans une partie inférieure, deux éléments d'ancrage EA1 et EA2. Ces derniers (EA1 et EA2) sont plus précisément placés dans un passage PS qui est situé à la jonction entre la partie inférieure PID du dossier DS et la partie arrière PAA de l'assise AS.

On entend ici par « partie arrière (PAA) de l'assise (AS) » la partie qui est destinée à être orientée vers l'arrière de la voiture et donc située du côté du dossier DS, et par « partie avant (PVA) de l'assise (AS) » la partie qui est opposée à la partie arrière PAA de l'assise AS et donc destinée à être orientée vers l'avant de la voiture. Par ailleurs, on entend ici par « partie inférieure (PID) du dossier (DS) » la partie qui est destinée à être orientée vers le plancher de la voiture et donc située du côté de la partie arrière PAA de l'assise AS, et par « partie supérieure (PSD) du dossier (DS) » la partie qui est opposée à la partie inférieure PID du dossier DS et donc destinée à être orientée vers le toit de la voiture.

On notera que le siège SI pourrait ne comporter qu'un seul élément d'ancrage EA1. On notera également que le ou les éléments d'ancrage EA1 et EA2 pourraient être solidarisés à la structure de la voiture plutôt qu'à la partie structurelle SS du siège SI si cette dernière partie (SS) était constituée par une partie de la structure du véhicule sur laquelle seraient alors rapportées et vissées la mousse et la garniture du dossier DS.

Les deux éléments d'ancrage EA1 et EA2 sont sensiblement placés symétriquement par rapport à un plan verticale médian, contenant la direction verticale Z et la direction longitudinale X et passant sensiblement par le milieu du siège SI. Par conséquent, ils sont situés dans deux zones latérales du siège SI et non dans une partie centrale de ce dernier (SI). On notera que dans le cas d'éléments d'ancrage EA1 et EA2 de type Isofix, la distance qui les sépare suivant la direction transversale Y (perpendiculaire à la direction longitudinale X) est fixée par une norme internationale.

Ces deux éléments d'ancrage EA1 et EA2 sont par exemple réalisés sous la forme de boucles métalliques, parfois appelées « fils d'ancrage », sur lesquelles peuvent venir s'ancrer par clippage les deux éléments de fixation inférieurs d'un dispositif amovible.

Le siège SI est également associé à une ceinture de sécurité à enrouleur automatique (non représenté). Cette ceinture de sécurité comprend un pêne extractible PE et une sangle SC comportant une partie centrale PCS prolongée à ses deux extrémités opposées par une partie d'extrémité dite inférieure PIS et une partie d'extrémité dite supérieure PSS.

Le pêne extractible PE comprend, d'une part, un corps muni d'au moins une ouverture dans laquelle peut coulisser la partie centrale PCS de la sangle SC, et d'autre part, une âme de verrouillage prolongeant le corps et destinée à être introduite par un passager dans une boucle (non représentée), elle-même destinée à être fixée à la structure du véhicule ou bien au siège SI et comportant un mécanisme de verrouillage amovible.

La partie centrale PCS de la sangle SC longe sensiblement la face avant du dossier DS (orientée vers la partie avant PVA de l'assise AS) dans sa zone latérale qui contient l'élément d'ancrage EA1.

La partie d'extrémité supérieure PIS de la sangle SC longe la partie supérieure PSD du dossier DS et est solidarisée à l'enrouleur automatique (non représenté). On notera que ce dernier peut faire partie du dossier DS ou bien être solidarisé à la structure de la voiture.

La partie d'extrémité inférieure PIS de la sangle SC passe par le passage PS situé à la jonction entre le dossier DS et l'assise AS, et est ici solidarisée fixement à la partie structurelle SS du siège SI.

On notera que dans une variante elle pourrait être solidarisée fixement à la structure de la voiture.

Afin d'éviter que cette partie d'extrémité inférieure PIS de la sangle SC masque l'élément d'ancrage EA1, et donc rende difficile la solidarisation (par clippage) d'un élément de fixation inférieur d'un dispositif amovible à cet élément d'ancrage EA1, l'invention propose d'adjoindre au siège SI un élément de maintien EM.

Plus précisément, l'invention propose de solidariser au siège SI, au voisinage du passage PS (situé à la jonction entre le dossier DS et l'assise AS) un élément de maintien EM qui est destiné à maintenir une portion de la partie inférieure PIS de la sangle SC dans une position qui est écartée latéralement de l'élément d'ancrage EA1 (suivant la direction transversale Y).

Par exemple, et comme illustré non limitativement sur les figures 1 et 2, l'élément de maintien EM peut être solidarisé à la partie arrière PAA de l'assise AS au voisinage du passage PS.

Mais, dans une variante non représentée, l'élément de maintien EM pourrait être solidarisé à la partie inférieure PID du dossier DS au voisinage du passage PS.

Dans un cas comme dans l'autre, il est important que cette solidarisation se fasse au voisinage du passage PS afin de ne pas gêner le passager assis sur le siège SI lorsqu'il utilise la ceinture de sécurité associée.

On notera qu'il est préférable que l'élément de maintien EM soit placé juste avant ou juste après l'élément d'ancrage EA1, suivant la direction transversale Y, afin que la légère désorientation angulaire de la partie inférieure PIS de la sangle SC par rapport à son point de fixation, qu'il induit de part sa position, soit minimale. Dans le cas de deux fils d'ancrage (ou éléments d'ancrage) EA1 et EA2 de type Isofix, le placement de l'élément de maintien EM entre les deux fils d'ancrage EA1 et EA2 perturberait le bon fonctionnement de la ceinture PCS de l'occupant. En effet, la sangle ne serait plus tendue à cause du dispositif amovible (ici un siège enfant (ou DRE)).

Afin de minimiser encore plus cette désorientation angulaire, il est avantageux que l'élément de maintien EM soit élastique. Cela offre en effet une possibilité de retour automatique de la ceinture (sans action du passager qui l'utilise). Il est en effet rappelé qu'un maintien assuré par des moyens de type velcro ou une lanière combinée à un bouton pression nécessite une action d'un passager avant le montage du dispositif amovible (ici un siège enfant (ou DRE)).

On notera que l'élasticité de l'élément de maintien EM permet en outre de mieux tendre la sangle SC.

Par exemple, et comme illustré non limitativement sur les figures 1 et 2, l'élément de maintien EM peut entourer au moins partiellement la portion de la partie inférieure PIS de la sangle SC.

Ainsi, et comme illustré non limitativement, l'élément de maintien EM peut être agencé sous la forme d'une bande (ou lanière), éventuellement élastique. Dans ce cas, la bande EM n'entoure que l'une des deux faces opposées de la portion de la partie inférieure PIS de la sangle SC. En d'autres termes, la portion de la partie inférieure PIS de la sangle SC se retrouve intercalée entre la face « supérieure » de l'assise AS (orientée vers le toit) et la face « interne » de la bande EM (orientée vers la face supérieure de l'assise AS).

Les deux extrémités opposées de la bande (ou lanière) EM peuvent être, par exemple, cousues (ou collées) sur la face supérieure de l'assise AS (ou dans une variante sur la face avant du dossier DS), de manière à être sensiblement alignées suivant la direction transversale Y.

Dans une variante non représentée, l'élément de maintien EM peut être agencé sous la forme d'une boucle, éventuellement élastique. Dans ce cas, la boucle EM entoure complètement la portion de la partie inférieure PIS de la sangle SC. En d'autres termes, la portion de la partie inférieure PIS de la sangle SC se retrouve logée dans la boucle EM. Au moins une partie de cette dernière (EM) peut être, par exemple, cousue (ou collée) sur la face supérieure de l'assise AS (ou dans une variante sur la face avant du dossier DS).

On notera que l'élément de maintien EM peut se présenter sous d'autres formes que celles décrites ci-avant, dès lors qu'il permet de maintenir une portion de la partie inférieure PIS de la sangle SC à quelque distance de l'élément d'ancrage EA1, autorisant ainsi son accès de façon permanente. Ainsi, il pourrait être réalisé, par exemple, sous la forme d'un crochet ou d'une patte conformée ou encore d'un anneau.

## Revendications

1. Siège (SI) de véhicule, comprenant un dossier (DS), une assise (AS) et au moins un élément d'ancrage (EA1), défini au niveau d'un passage (PS) situé à la jonction entre une partie inférieure (PID) du dossier (DS) et une partie arrière (PAA) de l'assise (AS) et sur lequel peut être ancré un dispositif amovible, **caractérisé en ce qu'**il comprend au voisinage dudit passage (PS) un élément de maintien (EM) destiné à maintenir dans une position écartée latéralement dudit élément d'ancrage (EA1) une portion d'une partie inférieure (PIS) d'une sangle (SC) de ceinture de sécurité destinée à passer par ledit passage (PS).

2. Siège selon la revendication 1, **caractérisé en ce que** ledit élément de maintien (EM) est élastique.

3. Siège selon l'une des revendications 1 et 2, **caractérisé en ce que** ledit élément de maintien (EM) est solidarisé à ladite partie arrière (PAA) de l'assise (AS) au voisinage dudit passage (PS).

4. Siège selon l'une des revendications 1 et 2, **caractérisé en ce que** ledit élément de maintien (EM) est solidarisé à ladite partie inférieure (PID) du dossier (DS) au voisinage dudit passage (PS).

5. Siège selon l'une des revendications 1 à 4, **caractérisé en ce que** ledit élément de maintien (EM) entoure au moins partiellement ladite portion de la partie inférieure (PIS) de la sangle (SC).

6. Siège selon la revendication 5, **caractérisé en ce que** ledit élément de maintien (EM) est agencé sous la forme d'une bande destinée à entourer l'une de deux faces opposées de ladite portion de la partie inférieure (PIS) de la sangle (SC).

7. Siège selon la revendication 5, **caractérisé en ce que** ledit élément de maintien (EM) est agencé sous la forme d'une boucle destinée à entourer complètement ladite portion de la partie inférieure (PIS) de la sangle (SC).

8. Siège selon l'une des revendications 1 à 7, **caractérisé en ce qu'**il est pré-équipé avec ladite sangle (SC).

9. Siège selon l'une des revendications 1 à 8, **caractérisé en ce que** ledit élément d'ancrage (EA1) est propre à permettre l'ancrage d'un élément de fixation inférieur d'un dispositif amovible constituant un siège enfant.

10. Siège selon l'une des revendications 1 à 9, **caractérisé en ce qu'**il est destiné à équiper un véhicule automobile.

## Claims

1. Vehicle seat (SI), comprising a backrest (DS), a base (AS) and at least one anchoring member (EA1), which is defined at a passage (PS) located at the join between a lower part (PID) of the backrest (DS) and a rear part (PAA) of the base (AS) and to which a removable device can be anchored, **characterised in that** it comprises, in the vicinity of said passage (PS), a holding member (EM) for keeping a portion of a lower part (PIS) of a seatbelt strap (SC), which is intended to pass through said passage (PS), laterally spaced apart from said anchoring member (EA1).

2. Seat according to claim 1, **characterised in that** said holding member (EM) is resilient.

3. Seat according to either claim 1 or claim 2, **characterised in that** said holding member (EM) is joined to said rear part (PAA) of the base (AS) in the vicinity of said passage (PS).

4. Seat according to either claim 1 or claim 2, **characterised in that** said holding member (EM) is joined to said lower part (PID) of the backrest (DS) in the vicinity of said passage (PS).

5. Seat according to any one of claims 1 to 4, **characterised in that** said holding member (EM) surrounds said portion of the lower part (PIS) of the strap (SC) at least in part.

6. Seat according to claim 5, **characterised in that** said holding member (EM) is arranged in the form of a band intended to surround one of the two opposing faces of said portion of the lower part (PIS) of the strap (SC).

7. Seat according to claim 5, **characterised in that** said holding member (EM) is arranged in the form of a buckle intended to surround completely said portion of the lower part (PIS) of the strap (SC).

8. Seat according to any one of claims 1 to 7, **characterised in that** it is pre-equipped with said strap (SC).

9. Seat according to any one of claims 1 to 8, **characterised in that** said anchoring member (EA1) is adapted to allow a lower fixing member of a removable device constituting a child seat to be anchored.

10. Seat according to any one of claims 1 to 9, **characterised in that** it is intended to equip a motor vehicle.

## Patentansprüche

1. Fahrzeugsitz (SI), der eine Rückenlehne (DS), eine Sitzfläche (AS) und mindestens ein Verankerungselement (EA1) umfasst, das auf Ebene eines Durchgangs (PS) definiert ist, der sich an der Verbindung zwischen einem unteren Teil (PID) der Rückenlehne (DS) und einem hinteren Teil (PAA) der Sitzfläche (AS) befindet und auf dem eine abnehmbare Vorrichtung verankerbar ist, **dadurch gekennzeichnet, dass** er in der Nähe des Durchgangs (PS) ein Halteelement (EM) umfasst, das dazu bestimmt ist, einen Abschnitt eines unteren Teils (PIS) eines Sicherheitsgurts-Gurts (SC), der dazu bestimmt ist, durch den Durchgang (PS) zu verlaufen, in einer seitlich beanstandeten Stellung von dem Verankerungselement (EA1) zu halten.

2. Sitz nach Anspruch 1, **dadurch gekennzeichnet, dass** das Halteelement (EM) elastisch ist.

3. Sitz nach einem der Ansprüche 1 und 2, **dadurch gekennzeichnet, dass** das Halteelement (EM) mit dem hinteren Teil (PAA) der Sitzfläche (AS) in der Nähe des Durchgangs (PS) verbunden ist.

4. Sitz nach einem der Ansprüche 1 und 2, **dadurch gekennzeichnet, dass** das Halteelement (EM) mit dem unteren Teil (PID) der Rückenlehne (DS) in der Nähe des Durchgangs (PS) verbunden ist.

5. Sitz nach einem der Ansprüche 1 bis 4, **dadurch gekennzeichnet, dass** das Halteelement (EM) mindestens teilweise den Abschnitt des unteren Teils (PIS) des Gurts (SC) umschließt.

6. Sitz nach Anspruch 5, **dadurch gekennzeichnet, dass** das Halteelement (EM) in Form eines Streifens ausgebildet ist, der dazu bestimmt ist, eine der zwei gegenüberliegenden Seiten des Abschnitts des unteren Teils (PIS) des Gurts (SC) zu umschließen.

7. Sitz nach Anspruch 5, **dadurch gekennzeichnet, dass** das Haltelement (EM) in Form einer Schlaufe ausgebildet ist, die dazu bestimmt ist, den Abschnitt des unteren Teils (PIS) des Gurts (SC) vollständig zu umschließen.

8. Sitz nach einem der Ansprüche 1 bis 7, **dadurch gekennzeichnet, dass** er mit dem Gurt (SC) vorausgerüstet ist.

9. Sitz nach einem der Ansprüche 1 bis 8, **dadurch gekennzeichnet, dass** das Verankerungselement (EA1) in der Lage ist, die Verankerung eines Befestigungselements unter einer abnehmbaren Vorrichtung, die einen Kindersitz darstellt, zu erlauben.

10. Sitz nach einem der Ansprüche 1 bis 9, **dadurch gekennzeichnet**, das er dazu bestimmt ist, ein Kraftfahrzeug auszustatten.
